# EUROPÄISCHE PATENTSCHRIFT

(11) **EP 2 933 508 B1**
(45) Veröffentlichungstag und Bekanntmachung des Hinweises auf die Patenterteilung: **28.06.2017**
(21) Anmeldenummer: 15160501.1
(22) Anmeldetag: 24.03.2015
(51) Int. Cl.: F16C 7/06

(54) **Zug-Druck-Stange**
PUSH-PULL ROD
PINCE DE TRACTION-COMPRESSION

(30) Priorität: 15.04.2014 DE 202014101792 U
(43) Veröffentlichungstag der Anmeldung: 21.10.2015
(73) Patentinhaber: RO-RA Aviation Systems GmbH, 4862 Schörfling a. Attersee (AT)
(72) Erfinder: Haller, Matthias, 4862 Schörfling (AT)
(74) Vertreter: Lösch, Christoph Ludwig Klaus

(56) Entgegenhaltungen:
- DE-A1- 1 937 876
- DE-U1-202014 100 782
- US-A- 1 711 598
- US-A- 3 216 091
- US-A- 3 501 828
- US-A- 4 461 063
- US-A- 5 429 014

## Beschreibung

Die Erfindung betrifft eine Zug-Druck-Stange.

Zug-Druck-Stangen, die beispielsweise im Flugzeugbau eingesetzt werden, weisen im Allgemeinen einen im Wesentlichen rohrförmigen Körper auf, an dessen Enden sich jeweils eine Befestigungsvorrichtung zur Montage der Zug-Druck-Stange an Montagepunkten befindet. Die Länge der Zug-Druck-Stange ist hierbei beispielsweise über eine oder mehrere Gewindeanordnungen verstellbar, um eine Anpassung an einen vorgegebenen Abstand zwischen den Montagepunkten vornehmen zu können. Zur Anbringung zwischen den Montagepunkten ist also eine Längenanpassung der Zug-Druck erwünscht. Nachdem die Zug-Druck-Stange jedoch zwischen den Montagepunkten angeordnet ist, soll im Allgemeinen die einmal eingestellte Länge möglichst exakt beibehalten werden. Entsprechende Zug-Druck-Stangen des Stands der Technik sind beispielsweise in US 5 429 014 A1 und US 3 501 828 A1 gezeigt. Letztgenannte Schrift zeigt eine Zug-Druck-Stange gemäß Präambel des Anspruchs 1.

Der Erfindung liegt daher die Aufgabe zugrunde, eine Zug-Druck-Stange anzubieten, deren eingestellte Länge möglichst definiert und zuverlässig erhalten bleibt.

Diese Aufgabe wird durch die Merkmale des Schutzanspruchs 1 gelöst. Vorteilhafte Ausführungsformen sind in den Unteransprüchen beschrieben.

Erfindungsgemäß weist die Zug-Druck-Stange einen hohlzylindrischen Rohrkörper, zumindest eine Befestigungsvorrichtung mit einem ersten Kupplungselement und einem daran angeordneten Schaft sowie ein zweites Kupplungselement auf. Der Schaft der Befestigungsvorrichtung ist durch eine Gewindeanordnung in den Rohrkörper eingeschraubt. Ferner weist der Schaft einen Verbindungsbereich mit polygonalem Querschnitt aufweist und am Rohrkörper ist eine Hülse ausgebildet, die formschlüssig mit dem Verbindungsbereich des Schafts verbunden ist.

Auf diese Weise kann die Zug-Druck-Stange zunächst durch Einschrauben des Schaftes (mittels der Gewindeanordnung) in den Rohrkörper die gewünschte Länge der Zug-Druck-Stange eingestellt werden. Anschließend erfolgt die formschlüssige Verbindung des Verbindungsbereichs des Schaftes mit der am Rohrkörper ausgebildeten Hülse. Diese formschlüssige Verbindung sorgt für eine definierte, zuverlässige, unlösbare Verbindung zwischen dem Adapterende und dem Mittelrohr. Die eingestellte Länge der Zug-Druck-Stange bleibt damit zuverlässig erhalten.

Mit anderen Worten wird die formschlüssige Verbindung zwischen dem Verbindungsbereich des Schaftes und der Hülse erst ausgebildet, wenn die Zug-Druck-Stange auf die gewünschte Länge eingestellt wurde.

In einer vorteilhaften Ausführungsform ist die formschlüssige Verbindung als Pressverbindung ausgebildet, insbesondere ist die am Rohrkörper ausgebildete Hülse mit dem Verbindungsbereich des Schaftes verpresst. D.h. durch Verpressen der Hülse mit dem Verbindungsbereich schmiegt sich die Hülse an den polygonalen Querschnitt des Verbindungsbereichs an und bildet auf diese Weise eine formschlüssige Verbindung mit diesem aus. Nach dem Verpressen besitzen somit sowohl der Verbindungsbereich des Schaftes als auch die Hülse einen polygonalen Querschnitt. Als besonders bevorzugte Ausführungsform hat sich hierbei die Verwendung eines Verbindungsbereichs mit achteckigem polygonalen Querschnitt herausgestellt.

Das zweite Kupplungselement kann entweder drehfest mit dem Rohrkörper oder mit einer weiteren Befestigungsvorrichtung verbunden sein. Je nach Ausführungsform können auf diese Weise beidseitig einstellbare (d.h. beidseitig vom Rohrkörper längenveränderbare) oder einseitig einstellbare (d.h. nur an einem Ende des Rohrkörpers längenveränderbare) Zug-Druck-Stangen bereitgestellt werden.

In einer vorteilhaften Ausführungsform weist die weitere Befestigungsvorrichtung einen Schaft auf, welcher durch eine Gewindeanordnung in den Rohrkörper eingeschraubt ist. Der Schaft der weiteren Befestigungsvorrichtung weist einen Verbindungsbereich mit polygonalem Querschnitt auf und am Rohrkörper ist eine weitere Hülse ausgebildet, die formschlüssig mit dem Verbindungsbereich des Schafts der weiteren Befestigungsvorrichtung verbunden ist. Mit anderen Worten weist der Rohrkörper an beiden Enden jeweils eine Befestigungsvorrichtung auf, durch die jeweils zunächst durch Einschrauben des jeweiligen Schaftes (mittels der jeweiligen Gewindeanordnung) in den Rohrkörper die gewünschte Länge der Zug-Druck-Stange eingestellt wird. Anschließend erfolgt die formschlüssige Verbindung des jeweiligen Verbindungsbereichs des Schaftes mit der jeweiligen am Rohrkörper ausgebildeten Hülse. Diese formschlüssigen Verbindungen sorgen für eine definierte, zuverlässige, unlösbare Verbindung zwischen dem jeweiligen Adapterende und dem Mittelrohr.

Die Erfindung ist anhand von Ausführungsbeispielen in den Zeichnungsfiguren weiter erläutert. Es zeigen:
- Fig. 1: eine perspektivische Ansicht einer Zug-Druck-Stange;
- Fig. 2: ein vergrößerter Ausschnitt der Zug-Druck-Stange aus Fig. 1;
- Fig. 3: eine Seitenansicht zweier Zug-Druck-Stangen aus Fig. 2, wobei eine Zug-Druck-Stange vor einem Verpressen der Hülse mit dem Verbindungsbereich und ein Zug-Druck-Stange nach dem Verpressen der Hülse mit dem Verbindungsbereich dargestellt ist;
- Fig. 4: eine Schnittansicht entlang der Schnittebene A1-A1 der Fig. 3;
- Fig. 5: eine Schnittansicht entlang der Schnittebene B1-B1 der Fig. 3;
- Fig. 6: eine weitere Ausführungsform der Zug-Druck-Stange; und
- Fig. 7: eine weitere Ausführungsform der Zug-Druck-Stange.

Gleiche bzw. gleichwirkenden Komponenten sind in den Zeichnungsfiguren jeweils mit gleichen Bezugszeichen gekennzeichnet.

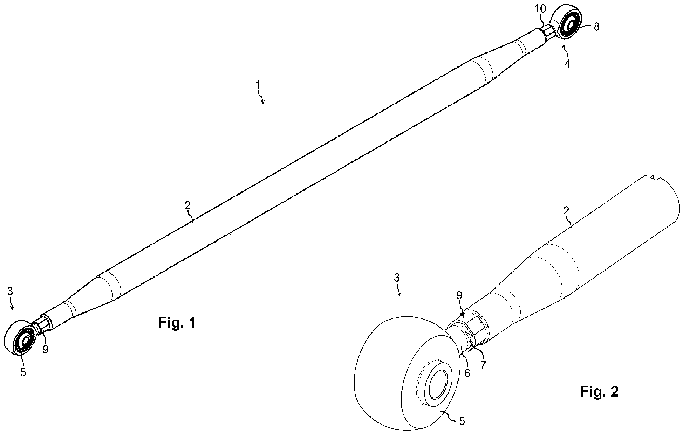

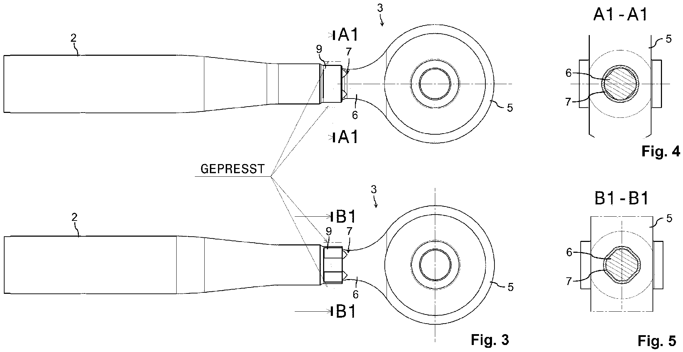

In Fig. 1 bis Fig. 5 ist eine erste Ausführungsform einer Zug-Druck-Stange 1 gezeigt. Die Zug-Druck-Stange 1 weist einen hohlzylindrischen Rohrkörper 2 sowie ein eine erste Befestigungsvorrichtung 3 und eine zweite Befestigungsvorrichtung 4 auf. Die erste Befestigungsvorrichtung 3 besitzt ein erstes, als Gelenkauge ausgebildetes Kupplungselement 5 sowie einen am Kupplungselement 5 angeordneten Schaft 6 auf. Wie in Fig. 4 und Fig. 5 dargestellt, weist der Schaft 6 in einem Verbindungsbereich einen polygonalen (genauer achteckigen) Querschnitt auf. Die Mantelfläche des Schaftes 6 ist ferner mit einem Außengewinde versehen. Dieses Außengewinde bildet gemeinsam mit einem korrespondierenden, auf der inneren Mantelfläche des Rohrkörpers 2 ausgebildeten Innengewinde eine Gewindeanordnung 7. Mit Hilfe dieser Gewindeanordung 7 kann der Schaft 6 in den Rohrkörper 2 eingeschraubt und auf diese Weise die gewünschte Länge der Zug-Druck-Strange 1 eingestellt werden.

Die zweite Befestigungsvorrichtung 4 besitzt ein zweites, ebenfalls als Gelenkauge ausgebildetes Kupplungselement 8 sowie einen am Kupplungselement 8 angeordneten Schaft (in den Zeichnungsfiguren nicht dargestellt) auf. Die Mantelfläche des Schaftes ist ebenfalls mit einem Außengewinde versehen und besitzt in einem Verbindungsbereich einen polygonalen (achteckigen) Querschnitt. Dieses Außengewinde bildet gemeinsam mit einem korrespondierenden, auf der inneren Mantelfläche des Rohrkörpers 2 ausgebildeten Innengewinde eine weitere Gewindeanordnung. Mit Hilfe dieser weiteren Gewindeanordnung kann der Schaft in den Rohrkörper 2 eingeschraubt und auf diese Weise ebenfalls die gewünschte Länge der Zug-Druck-Strange 1 eingestellt werden.

An den beiden Enden des Rohrkörpers 2 ist jeweils eine Hülse 9 bzw. 10 ausgebildet. Die Hülsen sind jeweils einstückig (und damit drehfest) mit dem Mittelkörper 2 verbunden und besitzen im Ausgangszustand einen kreisförmigen Querschnitt.

Zur Einstellung der gewünschten Länge der Zug-Druck-Stange 1 können nun die erste Befestigungsvorrichtung 3 und die zweite Befestigungsvorrichtung 4 mit Hilfe der jeweiligen Gewindeanordnung solange in den Rohrkörper 2 eingeschraubt werden, bis die gewünschte Länge der Zug-Druck-Stange 1 erreicht ist.

Anschließend werden die Hülsen 9, 10 auf den Verbindungsbereich des jeweiligen Schaftes gepresst, bis sich die Hülsen 9, 10 verformen und sich an Verbindungsbereich mit polygonalem Querschnitt anschmiegen. Nach dem Verpressen besitzen die Hülsen 9, 10 somit keinen kreisförmigen Querschnitt mehr, sondern einen ebenfalls polygonalen Querschnitt. Auf diese Weise wird eine formschlüssige Verbindung zwischen dem Verbindungsbereich des jeweiligen Schaftes und der jeweiligen Hülse 9, 10 ausgebildet. Die eingestellte Länge der Zug-Druck-Stange 1 wird auf diese Weise zuverlässig und exakt festgelegt. Eine nachträgliche Änderung bzw. eine Abweichung von der einmal eingestellten Länge kann auf dadurch zuverlässig verhindert werden.

Der Zustand vor dem Verpressen der Hülse 9 mit dem Verbindungsbereich des Schaftes 6 ist in der oberen Teilfigur von Fig. 3 und in Fig. 4 dargestellt. Die Hülse 9 besitzt einen kreisförmigen Querschnitt, während der Schaft 6 im Verbindungsbereich einen achteckigen Querschnitt aufweist.

Der Zustand nach dem Verpressen der Hülse 9 mit dem Verbindungsbereich des Schaftes 6 ist in der unteren Teilfigur von Fig. 3 und in Fig. 5 dargestellt. Sowohl die Hülse 9 als auch der Schaft 6 besitzen einen achteckigen Querschnitt.

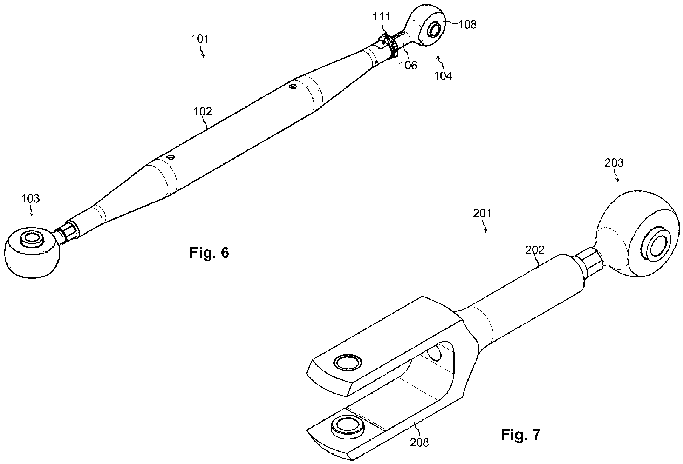

Fig. 6 zeigt eine weitere Ausführungsform einer Zug-Druck-Stange. Die dort abgebildete Zug-Druck-Stange 101 weist einen Rohrkörper 102 sowie ein eine erste Befestigungsvorrichtung 103 und eine zweite Befestigungsvorrichtung 104 auf. Der Rohrkörper 102 entspricht dem oben erwähnten Rohrkörper 2 und die erste Befestigungsvorrichtung 103 entspricht der obigen ersten Befestigungsvorrichtung 3. Die Zug-Druck-Stange 102 unterscheidet sich von der Zug-Druck-Stange 2 jedoch in der Ausbildung der zweiten Befestigungsvorrichtung 104.

Die zweite Befestigungsvorrichtung 104 weist ein als Gelenkauge ausgebildetes zweites Kupplungselement 108 sowie einen am Kupplungsgelenk 108 angeordneten Schaft 106. Der Schaft 106 ist über eine Gewindeanordnung in den Rohrkörper 102 einschraubbar. Eine Rasteinrichtung 111 beaufschlagt die Einschraubbewegung mit einer definierten Kraft, die überwunden werden muss, wenn eine Längenverstellung der Zug-Druck-Stange 101 erreicht werden möchte. Die erste Befestigungsvorrichtung 103 bildet somit nach der erstmaligen Längeneinstellung der Zug-Druck-Stange 101 eine definierte, formschlüssige Verbindung mit dem Rohrkörper 102 aus. Mit Hilfe der zweiten Befestigungsvorrichtung 104 hingegen kann auch nach der erstmaligen Längeneinstellung die Länge der Zug-Druck-Stange 101 (nach Überwindung der Einrastkraft) variiert werden.

Fig. 7 zeigt eine weitere Ausführungsform einer Zug-Druck-Stange. Die dort abgebildete Zug-Druck-Stange 201 weist einen Rohrkörper 202 sowie eine erste Befestigungsvorrichtung 203 auf. Der Rohrkörper 202 entspricht dem oben erwähnten Rohrkörper 2 und die erste Befestigungsvorrichtung 203 entspricht der obigen ersten Befestigungsvorrichtung 3. Die Zug-Druck-Stange 202 unterscheidet sich von der Zug-Druck-Stange 2 jedoch darin, dass kein zweites Befestigungselement vorhanden ist. Vielmehr ist ein als Gabelkopf ausgebildetes zweites Kupplungselement 208 unmittelbar drehfest mit dem Rohrkörper 202 verbunden.

### BEZUGSZEICHENLISTE

- 1, 101, 201: Zug-Druck-Stange
- 2, 102, 202: Rohrkörper
- 3, 103, 203: erste Befestigungsvorrichtung
- 4, 104: zweite Befestigungsvorrichtung
- 5: erstes Kupplungselement
- 6, 106: Schaft
- 7: Gewindeanordnung
- 8, 108, 208: zweites Kupplungselement
- 9, 10: Hülse
- 111: Rasteinrichtung

## Patentansprüche

1. Zug-Druck-Stange (1, 101, 201), aufweisend:
- einen hohlzylindrischen Rohrkörper (2, 102, 202);
- zumindest eine Befestigungsvorrichtung (3, 103, 203) mit einem ersten Kupplungselement (5) und einem daran angeordneten Schaft (6), wobei der Schaft (6) durch eine Gewindeanordnung (7) in den Rohrkörper (2, 102, 202) eingeschraubt ist; und
- ein zweites Kupplungselement (8, 108, 208),
**dadurch gekennzeichnet, dass** der Schaft (6) einen Verbindungsbereich mit polygonalem Querschnitt aufweist und am Rohrkörper (2, 102, 202) eine Hülse (9) ausgebildet ist, die formschlüssig mit dem Verbindungsbereich des Schafts (6) verbunden ist.

2. Zug-Druck-Stange nach Anspruch 1, wobei die Hülse (9) als Hülse ausgebildet ist, die mit dem Verbindungsbereich des Schaftes (6) verpresst ist.

3. Zug-Druck-Stange nach einem der vorhergehenden Ansprüche, wobei der Querschnitt des Verbindungsbereichs als achteckiger Querschnitt ausgebildet ist.

4. Zug-Druck-Stange nach einem der vorhergehenden Ansprüche, wobei das zweite Kupplungselement (208) drehfest mit dem Rohrkörper (202) verbunden ist.

5. Zug-Druck-Stange nach einem der Ansprüche 1 bis 3, wobei das zweite Kupplungselement (8, 108) drehfest mit einer weiteren Befestigungsvorrichtung (4, 104) verbunden ist.

6. Zug-Druck-Stange nach Anspruch 5, wobei die weitere Befestigungsvorrichtung (4) einen Schaft aufweist, welcher durch eine Gewindeanordnung in den Rohrkörper (2) eingeschraubt ist und wobei der Schaft der weiteren Befestigungsvorrichtung (4) einen Verbindungsbereich mit polygonalem Querschnitt aufweist und am Rohrkörper (2) eine weitere Hülse (10) ausgebildet ist, die formschlüssig mit dem Verbindungsbereich des Schafts der weiteren Befestigungsvorrichtung (4) verbunden ist.

## Claims

1. Push-pull rod (1, 101, 201) having:
- a hollow-cylindrical tube body (2, 102, 202);
- at least one fastening device (3, 103, 203) having a first coupling element (5) and a shank (6) arranged thereon, wherein the shank (6) is screwed into the tube body (2, 102, 202) by a thread arrangement (7); and
- a second coupling element (8, 108, 208),
**characterized in that**
the shank (6) has a connecting region with a polygonal cross section and a sleeve (9) is formed on the tube body (2, 102, 202), said sleeve (9) being connected to the connecting region of the shank (6) in a form-fitting manner.

2. Push-pull rod according to Claim 1, wherein the sleeve (9) is configured as a sleeve which is pressed together with the connecting region of the shank (6).

3. Push-pull rod according to either of the preceding claims, wherein the cross section of the connecting region is configured as an octagonal cross section.

4. Push-pull rod according to one of the preceding claims, wherein the second coupling element (208) is connected to the tube body (202) in a rotationally fixed manner.

5. Push-pull rod according to one of Claims 1 to 3, wherein the second coupling element (8, 108) is connected to a further fastening device (4, 104) in a rotationally fixed manner.

6. Push-pull rod according to Claim 5, wherein the further fastening device (4) has a shank which is screwed into the tube body (2) by a thread arrangement, and wherein the shank of the further fastening device (4) has a connecting region with a polygonal cross section and a further sleeve (10) is formed on the tube body (2), said sleeve (10) being connected to the connecting region of the shank of the further fastening device (4) in a form-fitting manner.

## Revendications

1. Pince de traction-compression (1, 101, 201), présentant :
- un corps tubulaire cylindrique creux (2, 102, 202) ;
- au moins un dispositif de fixation (3, 103, 203) avec un premier élément d'accouplement (5) et une tige (6) disposée sur celui-ci, la tige (6) étant vissée par un agencement fileté (7) dans le corps tubulaire (2, 102, 202) ; et
- un deuxième élément d'accouplement (8, 108, 208),
**caractérisée en ce que** la tige (6) présente une région de connexion de section transversale polygonale et, sur le corps tubulaire (2, 102, 202), une douille (9) qui est connectée par engagement par correspondance de formes à la région de connexion de la tige (6).

2. Pince de traction-compression selon la revendication 1, dans laquelle la douille (9) est réalisée sous forme de douille qui est pressée avec la région de connexion de la tige (6).

3. Pince de traction-compression selon l'une quelconque des revendications précédentes, dans laquelle la section transversale de la région de connexion est réalisée sous forme de section transversale octogonale.

4. Pince de traction-compression selon l'une quelconque des revendications précédentes, dans laquelle le deuxième élément d'accouplement (208) est connecté de manière solidaire en rotation au corps tubulaire (202).

5. Pince de traction-compression selon l'une quelconque des revendications 1 à 3, dans laquelle le deuxième élément d'accouplement (8, 108) est connecté de manière solidaire en rotation à un dispositif de fixation supplémentaire (4, 104).

6. Pince de traction-compression selon la revendication 5, dans laquelle le dispositif de fixation supplémentaire (4) présente une tige qui est vissée par un agencement fileté dans le corps tubulaire (2) et dans laquelle la tige du dispositif de fixation supplémentaire (4) présente une région de connexion de section transversale polygonale et une douille supplémentaire (10) est réalisée sur le corps tubulaire (2), laquelle est connectée par engagement par correspondance de formes à la région de connexion de la tige du dispositif de fixation supplémentaire (4).
